(19) Europäisches Patentamt / European Patent Office / Office européen des brevets

(11) **EP 3 115 738 B1**

(12) **EUROPÄISCHE PATENTSCHRIFT**

(45) Veröffentlichungstag und Bekanntmachung des Hinweises auf die Patenterteilung:
**02.09.2020 Patentblatt 2020/36**

(51) Int Cl.:
*F41G 3/02* *(2006.01)*          *G01C 17/38* *(2006.01)*
*F41G 3/06* *(2006.01)*          *F41G 3/32* *(2006.01)*

(21) Anmeldenummer: **15175416.5**

(22) Anmeldetag: **06.07.2015**

(54) **OPTOELEKTRONISCHES MESSGERÄT UND VERFAHREN ZUR STÖRUNGSERKENNUNG**

OPTOELECTRONIC MEASURING DEVICE AND METHOD FOR FAULT DETECTION

APPAREIL DE MESURE OPTOELECTRONIQUE ET PROCEDE DE DETECTION DE PANNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.01.2017 Patentblatt 2017/02**

(73) Patentinhaber: **Safran Vectronix AG**
**9435 Heerbrugg (CH)**

(72) Erfinder:
• **Annen, Ivo**
**CH-8834 Schindellegi (CH)**
• **Schiller, Marzell**
**D-88131 Lindau (DE)**

(74) Vertreter: **Kaminski Harmann**
**Patentanwälte AG**
**Landstrasse 124**
**9490 Vaduz (LI)**

(56) Entgegenhaltungen:
**DE-C1- 19 609 762     US-A1- 2010 307 015**
**US-B1- 8 275 544      US-B2- 7 325 320**
**US-B2- 7 340 362**

**Beschreibung**

Die Erfindung betrifft ein handhaltbares optoelektronisches Messgerät, insbesondere Zielgerät, mit einem elektronischen Magnetkompass zum Bestimmen der azimutalen Ausrichtung des Messgeräts sowie ein Verfahren zum Festlegen einer zu erwartenden Genauigkeit der azimutalen Ausrichtung eines Messgeräts mit einem Magnetkompass. Erfindungsgemäss wird durch das Messgerät selbsttätig erkannt, wenn die zu erwartende Genauigkeit zu gering ist, insbesondere eine neue Kompensation vorgenommen werden muss, und es erfolgt mindestens ein Warnhinweis an den Benutzer.

Derartige Messgeräte werden, beispielsweise bei der Objektaufnahme und Datensammlung für Geographische Informationssysteme (GIS), zum Bestimmen von Koordinaten entfernter Objekte eingesetzt. Solche Messgeräte können auch als tragbare Zielgeräte ausgebildet sein, wie z. B. in der US 7,340,362 B2 beschrieben, und insbesondere bei Koordinatenbestimmungen militärischer Zielobjekte Verwendung finden, wie z. B. in der US 7,325,320 B2 beschrieben.

Ein derartiges Bestimmen von Zielkoordinaten erfordert die Relativkoordinaten zwischen dem Messgerät und dem Zielobjekt. Für diesen Zweck wird das Zielgerät auf das Zielobjekt ausgerichtet und dann die azimutale und die zenitale Ausrichtung des Zielgeräts relativ zur Erde bestimmt. Die bestimmten Winkelwerte können dann zusammen mit jeweils einem typischen Genauigkeitswert an einer Datenschnittstelle des Zielgeräts zur Übermittlung an eine Feuerleiteinrichtung bereitgestellt werden. Von der Feuerleiteinrichtung kann dann über eine Feuereinheit Feuerwirkung in ein den übermittelten Zielkoordinaten zugeordnetes Gebiet eingebracht werden.

In Bezug auf die erzielbare Genauigkeit der zu bestimmenden Zielkoordinaten ist der Magnetkompass die kritische Komponente. Aufgrund des übermittelten Genauigkeitwerts der azimutalen Ausrichtung lässt sich einerseits der Effekt einer einzubringenden Feuerwirkung auf das Zielobjekt und andererseits die Wahrscheinlichkeit von Kollateralschäden beurteilen. Bei einer wesentlichen Abweichung zwischen dem effektiven und dem vorgegebenen typischen Genauigkeitswert kann diese Beurteilung falsch sein.

Auch mit einem elektronischen Magnetkompass ist beim Bestimmen azimutaler Ausrichtungen nach wie vor grosse Vorsicht geboten, obwohl die Komponenten des Magnet- und Gravitationsfelds als solches mit ausreichender Gerätegenauigkeit messbar sind. Auch lässt sich heute, wie aus der US 4 949 089 bekannt, die Missweisung des Erdmagnetfelds von der geographischen Nordrichtung mittels der in militärischen GPS-Empfängern implementierten "Magnetic-Variation-Compensation" praktisch automatisch berücksichtigen. Da jedoch das gemessene Magnetfeld neben dem Erdmagnetfeld, dem Träger der Nordrichtungsinformation, in der Regel diesem überlagerte, magnetische Störfelder umfasst, kann die azimutale Ausrichtung relativ zur geographischen Nordrichtung dennoch oft nur mit einer sehr beschränkten Genauigkeit und Zuverlässigkeit, die ein Vielfaches der reinen Gerätegenauigkeit sein kann, bestimmt werden.

Diese magnetischen Störfelder umfassen dem Messort zugeordnete, ortsfeste Störfelder und gerätefeste Störfelder, die auf elektrische Ströme sowie hart- und weichmagnetische Materialien des Geräts zurückgehen, in das der Magnetkompass eingebaut ist. Ortsfeste Störfelder werden zudem in Störfelder von regionalem und Störfelder von lokalem Massstab unterschieden.

Störfelder von regionalem Massstab, so genannte Anomalien des Erdmagnetfeldes, gehen in der Regel auf natürliche Störeinflüsse, beispielsweise grossräumige Ablagerungen von Eisenerz, zurück. Diese Störfelder sind in einem lokalen Massstab betrachtet homogen und bewirken lokal, vergleichbar der Missweisung des Erdmagnetfeldes, einen konstanten Azimutfehler.

Störfelder von lokalem Massstab gehen hingegen auf von Menschenhand geschaffene Objekte, beispielsweise Eisenbahngleise, Wasser- oder Freileitungen, Pipelines oder Bauwerke aus Stahl und Stahlbeton, zurück. Auch quasistationäre Objekte, wie abgestellte Fahrzeuge oder in Stellung gebrachte Waffensysteme, verursachen magnetische Störfelder von lokalem Massstab. Diese Störfelder sind in einem lokalen Massstab betrachtet inhomogen und bewirken auch innerhalb von Messräumen mit Abmessungen von Metern variierende Azimutfehler, welche an manchen Orten auch verschwinden können.

Wie aus der DE 196 09 762 C1 bekannt, lassen sich gerätefeste Störfelder eines Geräts mit einem elektronischen Magnetkompass, der Sensoren zum dreidimensionalen Messen eines Magnet- und Gravitationsfelds aufweist, beim Bestimmen azimutaler Ausrichtungen des Geräts mittels einer Vektorgleichung arithmetisch kompensieren. Die Parameter der Vektorgleichung müssen vorher mittels eines Optimierungsverfahrens bestimmt werden. Dieses Optimierungsverfahren basiert auf Werten einer mehr oder weniger starr vorgegebenen Abfolge von Messungen des Magnet- und Gravitationsfelds an einem Messort. Dabei wird das Gerät bei jeder dieser Messungen jeweils unterschiedlich im Raum ausgerichtet. Auf diese Weise können jedoch ortsfeste magnetische Störfelder weder kompensiert noch am Messort detektiert werden.

Aus der US 6,539,639 B2 ist ein Verfahren bekannt, bei dem die Genauigkeit beim Bestimmen einer azimutalen Ausrichtung mit einem Magnetkompass überwachbar sein soll. Da ein derartiger Magnetkompass Sensoren zum dreidimensionalen Messen des Magnet- und Gravitationsfelds aufweist, fallen beim Bestimmen einer azimutalen Ausrichtung auch die Werte der Horizontal- und Vertikalfeldstärke des Magnet- und Gravitationsfelds an. Das Verfahren beruht hier auf einem Vergleich dieser Werte mit abgespeicherten Werten der Horizontal- und Vertikalfeldstärke aus der Vergangenheit im Lichte eines vorgegebenen Schwellwerts.

Die abgespeicherten Werte der Horizontal- und Vertikalfeldstärke können dabei einerseits bei einer Bestimmung der Parameter, vergleichbar der DE 196 09 762 C1, an einem anderen Messort oder andererseits durch Mittelung von Horizontal- und Vertikalfeldstärken vergangener Bestimmungen der azimutalen Ausrichtung zurückgehen. Da jedoch kein direkter Zusammenhang zwischen einer Änderung der Horizontal- und Vertikalfeldstärke zwischen unterschiedlichen Messorten und einem Auftreten von Azimutfehlern vorliegt und andererseits auch bei ähnlichen Horizontal- und Vertikalfeldstärken an unterschiedlichen Messorten bedeutende Azimutfehler auftreten können, treten bei derartigen Überwachungen immer wieder Fehlwarnungen auf bzw. bleiben notwendige Warnungen aus. Zudem beinhaltet eine solche Warnung auch nur die Information, dass Differenzen von Horizontal- und/oder Vertikalfeldstärken von einer gewissen Grösse über einen gewissen Zeitraum hinweg festgestellt wurden.

Die US 8,275,544 B1 offenbart ein Verfahren zur Überwachung der Genauigkeit der mittels eines elektronischen Magnetkompasses zu bestimmenden azimutalen Ausrichtung eines handhaltbaren optoelektronischen Messgeräts mit einem selbsttätigen Ermitteln eines Genauigkeitsschätzwertes durch das Messgerät basierend auf Messdaten des Magnetkompasses, wobei der ermittelte Genauigkeitsschätzwert einem Benutzer bereitgestellt wird.

Hilfreich wäre es, wenn dem Anwender Information bereitgestellt würde, die ihn vor aktuellen Störeinflüssen warnt. Eine solche Fehler- oder Genauigkeitsindikation bezüglich der Azimutmessung wird in keinem der genannten Dokumente erwähnt.

Aus der US 2010/307015 A1 ist bekannt, eine Wahrscheinlichkeit zu ermitteln, dass ein Genauigkeitsschätzwert einer azimutalen Ausrichtung ein zuvor festgelegtes Genauigkeitskriterium erfüllt, um die Genauigkeit der azimutalen Ausrichtung an einen Benutzer zu übermitteln.

Aufgabe der Erfindung ist es daher, Mängel des Standes der Technik zu beseitigen und ein Messgerät mit einem elektronischen Magnetkompass zum Bestimmen der azimutalen Ausrichtung des Messgeräts und ein Verfahren zum Festlegen der Genauigkeit der zu bestimmenden azimutalen Ausrichtung eines Messgeräts mit einem Magnetkompass bereitzustellen, mit dem die Zuverlässigkeit von Angaben über die Genauigkeit der zu bestimmenden azimutalen Ausrichtung erhöht wird.

Eine weitere Aufgabe der Erfindung ist es, ein solches Messgerät und Verfahren bereitzustellen, mit welchen das Versenden von Daten mit einer zu hohen Unzuverlässigkeit verhindert wird.

Eine weitere Aufgabe der Erfindung ist es, ein solches Messgerät und Verfahren bereitzustellen, das es einem Benutzer erleichtert, Entscheidungen, insbesondere über die Verwertbarkeit ermittelter Daten, zu treffen.

Mindestens eine dieser Aufgaben wird erfindungsgemäss durch ein Verfahren und ein optoelektronisches Messgerät mit den Merkmalen des Patentanspruchs 1 bzw. 9 gelöst. Weitere alternative oder vorteilhafte Aus- bzw. Weiterbildungen der Erfindung sind in den abhängigen Patentansprüchen beschrieben.

Ein erfindungsgemässes, handhaltbares optoelektronisches Messgerät weist einen elektronischen Magnetkompass zum Bestimmen der azimutalen Ausrichtung des Messgeräts und eine Schnittstelle zum Bereitstellen eines Signals auf, das insbesondere für eine Feuerleiteinrichtung bestimmt ist. Das Signal umfasst neben Information über die bereits bestimmte azimutale Ausrichtung des Messgeräts auch Information über eine zu erwartende Genauigkeit der bestimmten azimutalen Ausrichtung. Gemäss der Erfindung weist das Messgerät Mittel zum Festlegen der Genauigkeit der noch zu bestimmenden azimutalen Ausrichtung des Messgeräts auf. Die Mittel zum Festlegen sind einerseits dem Magnetkompass zugeordnet und andererseits derart ausgebildet, dass basierend auf Messdaten des Magnetkompasses die Genauigkeit vom Messgerät selbsttätig festlegbar ist. Bei einem erfindungsgemässen Verfahren zum Festlegen einer zu erwartende Genauigkeit der mittels eines elektronischen Magnetkompasses zu bestimmenden azimutalen Ausrichtung wird die zu erwartende Genauigkeit basierend auf Messdaten des Magnetkompasses vom Messgerät selbsttätig festgelegt.

Diese Festlegung macht sich den Umstand zunutze, dass azimutale Ausrichtungen prinzipiell umso zuverlässiger und genauer bestimmt werden können, je homogener das ortsfeste Magnetfeld in dem Raumbereich ist, in welchem die azimutalen Ausrichtungen bestimmt werden. Ein aus dem Stand der Technik bekannter vorgegebener, konstanter Genauigkeitswert gibt effektive Genauigkeiten beim Bestimmen nur unbefriedigend wieder, da in der Praxis grosse Unterschiede zwischen ortsfesten Magnetfeldern an unterschiedlichen Messorten anzutreffen sind. Das Spektrum reicht von praktisch homogenen ortsfesten Magnetfeldern beispielsweise in einem naturbelassenen Gebiet bis zu stark inhomogenen ortsfesten Magnetfeldern in urbanem Umfeld.

Weitere negative Einflüsse auf die erzielbare Genauigkeit werden durch Inhomogenitäten des Magnetfeldes hervorgerufen, die von einer Bedienperson, die das Messgerät auf das Zielobjekt ausrichtet und die Relativkoordinaten zwischen dem Zielobjekt und dem Messgerät bestimmt, verursacht werden können.

Nicht zuletzt weist das Messgerät selbst oft gerätefeste magnetische Störfelder auf, die, falls sie nicht beispielsweise gemäss der DE 196 09 762 C1 kompensiert werden, die azimutale Bestimmung ebenfalls zusätzlich negativ beeinflussen.

Information über das Ausmass einer vom Messgerät nicht kompensierbaren Inhomogenität des der azimutalen Bestimmung zugrunde liegenden Magnetfeldes wird zum Festlegen der zu erwartenden Genauigkeit herangezogen. Diese Information kann aus Messdaten des Magnetkompasses im Prinzip auf viele unterschiedliche Art und Weise gewonnen werden.

Beispielsweise könnten zum Festlegen der Genauigkeit geeignete Messdaten durch mehrere Messungen des Magnetkompasses auf dasselbe weit entfernte Zielobjekt von unmittelbar benachbarten Standorten aus gewonnen werden. Vorzugsweise liegen die benachbarten Standorten entlang derselben Visierlinie zum anvisierten Zielobjekt.

Auch wäre es denkbar, dass im Messgerät mehrere Magnetkompasse beanstandet zueinander angeordnet sind. Aufgrund der unterschiedlichen Messdaten der Magnetkompasse könnten vom Messgerät Information über die Inhomogenität des zu messenden Magnetfeldes für die Festlegung der zu erwartenden Genauigkeit, gegebenenfalls durch gleichzeitige Messungen, gewonnen werden.

Bei einer Weiterbildung der Erfindung ist ein Messgerät mit einem Magnetkompass mit gerätefest angeordneten Messsensoren zum Messen eines Magnetfelds und der Richtung des Gravitationsfelds und eine Einrichtung zum Kompensieren gerätefester, hartmagnetischer oder hart- und weichmagnetischer Störfelder vorgesehen. Wie aus der DE 196 09 762 C1 bekannt, können mit einer solchen Einrichtung - basierend auf Messdaten einer Reihe von Messungen mit einem jeweils unterschiedlich ausgerichteten Magnetkompass - störende Magnetfelder gerätefester elektrischer Ströme sowie gerätefester hartmagnetische Materialien bzw. hart- und weichmagnetische Materialien kompensiert werden. Da die für die Kompensation der Störfelder notwendige Information auch Information über die Inhomogenität des den Messungen zugrunde liegenden Magnetfeldes beinhaltet, kann letztere Information zugleich auch für ein Festlegen der zu erwartenden Genauigkeit der azimutalen Ausrichtung der verwendet werden. Dadurch wird im Zuge einer Kompensation gerätefester Störfelder auch die zu erwartende Genauigkeit azimutaler Bestimmungen festlegbar. Die Vorteile für die Bedienung eines solchen Messgerätes und der Fertigung desselben liegen auf der Hand.

Ein erster Aspekt der Erfindung betrifft ein Verfahren zur Überwachung der Genauigkeit der mittels eines elektronischen Magnetkompasses zu bestimmenden azimutalen Ausrichtung eines handhaltbaren optoelektronischen Messgeräts, mit einem selbsttätigen Festlegen einer zu erwartenden Genauigkeit durch das Messgerät basierend auf Messdaten des Magnetkompasses. Erfindungsgemäss weist das Verfahren eine Sicherheitsprüfung auf, im Rahmen derer durch das Messgerät selbsttätig eine Wahrscheinlichkeit ermittelt wird, dass der Genauigkeits-Schätzwert ein zuvor festgelegtes Genauigkeitskriterium erfüllt, und die ermittelte Wahrscheinlichkeit als Rückgabewert einem Benutzer bereitgestellt wird.

Dabei wird der Rückgabewert basierend auf der Formel

$$p[\%] = 100 \cdot \left(1 - \frac{\sin(\Delta a)}{\sin(wc)}\right)$$

berechnet, wobei p[%] der dem Benutzer bereitgestellte Rückgabewert in Prozent ist, $\Delta a$ eine definierte Obergrenze für einen Azimutfehler, und wc der maximal mögliche Azimutwinkelfehler.

In einer Ausführungsform des erfindungsgemässen Verfahrens ist die definierte Obergrenze für einen Azimutfehler dabei ein durch den Benutzer festgelegtes Genauigkeitskriterium.

Der maximal mögliche Azimutwinkelfehler wird insbesondere basierend auf dem Unterschied zwischen einem bei einer Kompensation des Messgeräts bestimmten Referenzhorizontalfeld und einem aktuell gemessenen Horizontalfeld berechnet, insbesondere basierend auf der Formel

$$\sin(wc) = \frac{\left|\left(\left|b_{H\_ref}\right| - \left|b_H\right|\right)\right|}{\left|b_H\right|},$$

wobei $b_{H\_ref}$ das Referenzhorizontalfeld ist und $b_H$ das gemessene Horizontalfeld, das basierend auf der Formel

$$\left|b_H\right| = \left|b_{H\_ref}\right| + \left|d\right|$$

berechnet wird, wobei d eine Abweichung ist.

In einer weiteren Ausführungsform des erfindungsgemässen Verfahrens erfolgt durch das Messgerät im Rahmen der Sicherheitsprüfung ein selbsttätiges Prüfen, ob die Wahrscheinlichkeit, dass der Genauigkeits-Schätzwert ein zuvor festgelegtes Genauigkeitskriterium erfüllt, ein zuvor festgelegtes Wahrscheinlichkeitskriterium erfüllt. Wenn das Wahrscheinlichkeitskriterium erfüllt ist, stellt das Messgerät einem externen Empfänger selbsttätig ein Signal bereit, das mindestens Information über die azimutale Ausrichtung umfasst. Wenn das Wahrscheinlichkeitskriterium nicht erfüllt ist, gibt das Messgerät hingegen selbsttätig einen Warnhinweis an den Benutzer aus.

In einer Ausführungsform dieses Verfahrens erfolgt, wenn das Genauigkeitskriterium nicht erfüllt ist, durch das Messgerät selbsttätig ein Verzögern oder Verhindern des Bereitstellens des Signals, oder eine Aufforderung an den Benutzer zum Bestätigen des Bereitstellens des Signals.

In einer weiteren Ausführungsform dieses Verfahrens umfasst der Warnhinweis eine Aufforderung zum Kompensieren des Messgerätes, insbesondere wobei bis zu einem Kompensieren des Messgerätes das Messgerät selbsttätig ein Bereitstellen eines Signals verhindert.

Das Signal umfasst insbesondere den Genauigkeits-Schätzwert, das Genauigkeitskriterium und/oder eine durch das Messgerät ermittelte Richtung und Entfernung zu einem Ziel. Der externe Empfänger ist insbesondere ein Geographisches Informationssystem (GIS), eine militärische Feuerleiteinrichtung oder ein handhaltbares Datenverarbeitungsgerät, z. B. ein Smartphone oder ein Tablet Computer, ist.

In einer weiteren Ausführungsform dieses Verfahrens umfasst der Warnhinweis an den Benutzer mindestens ein Warnsignal in Form eines akustischen Signals und/oder eines Vibrationsalarms, insbesondere wobei die Art des Warnsignals durch den Benutzer auswählbar ist.

In einer weiteren Ausführungsform dieses Verfahrens werden dem Benutzer Messdaten, insbesondere aufweisend die azimutale Ausrichtung, am Messgerät angezeigt. Der Warnhinweis an den Benutzer umfasst dann mindestens ein Anzeigen der Wahrscheinlichkeit und/oder des Nichterfüllens des Wahrscheinlichkeitskriteriums, wobei die zu erwartende Genauigkeit und/oder das Nichterfüllen des Wahrscheinlichkeitskriteriums anstelle der Messdaten oder optisch hervorgehoben zusammen mit den Messdaten durch dieselben Anzeigemittel des Messgerätes angezeigt werden wie die Messdaten, insbesondere auf demselben Display oder eingespiegelt in dieselbe Optik des Messgerätes und insbesondere farblich hervorgehoben, blinkend, als graphische Darstellung, und/oder die Messdaten überlagernd.

In einer Ausführungsform weist das erfindungsgemässe Verfahren eine Kompensation des Messgerätes vor dem Bestimmen der azimutalen Ausrichtung und ein benutzergesteuertes Festlegen des Genauigkeitskriteriums und/oder des Wahrscheinlichkeitskriteriums. Dieses benutzergesteuerte Festlegen weist insbesondere ein Abfragen des Genauigkeits- bzw. Wahrscheinlichkeitskriteriums durch das Messgerät und eine Eingabe des Genauigkeits- bzw. Wahrscheinlichkeitskriteriums durch den Benutzer.

Das Genauigkeitskriterium umfasst insbesondere mindestens einen Genauigkeits-Schwellenwert, und das Genauigkeitskriterium ist erfüllt, wenn die zu erwartende Genauigkeit den Genauigkeits-Schwellenwert erreicht oder überschreitet.

In einer Ausführungsform des erfindungsgemässen Verfahrens wird das Messgerät zum Erlangen der Messdaten des Magnetkompasses mehrmals unterschiedlich azimutal und zenital ausgerichtet.

In einer weiteren Ausführungsform des erfindungsgemässen Verfahrens wird der Genauigkeits-Schätzwert basierend auf Messdaten des Magnetkompasses für ein Kompensieren gerätefester, hart- und weichmagnetischer Störfelder vom Messgerät selbsttätig festgelegt.

Ein zweiter Aspekt der Erfindung betrifft ein handhaltbares optoelektronisches Messgerät mit einem elektronischen Magnetkompass zum Bestimmen der azimutalen Ausrichtung des Messgeräts, einer Schnittstelle zum Bereitstellen eines Signals, das Information über die azimutale Ausrichtung umfasst, für einen externen Empfänger, insbesondere ein Geographisches Informationssystem, eine militärische Feuerleiteinrichtung oder ein handhaltbares Datenverarbeitungsgerät, und einer Sicherheitskomponente zum Ermitteln einer Genauigkeit der zu bestimmenden azimutalen Ausrichtung, die dem Magnetkompass zugeordnet derart ausgebildet ist, dass basierend auf Messdaten des Magnetkompasses ein Genauigkeits-Schätzwert vom Messgerät selbsttätig festlegbar ist. Erfindungsgemäss ist das Messgerät dazu ausgestaltet, im Rahmen einer Sicherheitsprüfung der Sicherheitskomponente selbsttätig eine Wahrscheinlichkeit zu ermitteln, dass der Genauigkeits-Schätzwert ein zuvor festgelegtes Genauigkeitskriterium erfüllt, und weist Ausgabemittel auf, die dazu ausgestaltet sind, die Wahrscheinlichkeit als Rückgabewert einem Benutzer bereitzustellen.

Die Wahrscheinlichkeit wird dabei basierend auf der Formel

$$p[\%] = 100 \cdot \left(1 - \frac{\sin(\Delta a)}{\sin(wc)}\right)$$

berechnet, wobei *p[%]* die dem Benutzer bereitgestellte Wahrscheinlichkeit in Prozent ist, $\Delta a$ die Obergrenze für einen Azimutfehler, und *wc* der maximal mögliche Azimutwinkelfehler.

In einer Ausführungsform ist das erfindungsgemässe Messgerät dazu ausgestaltet,

- im Rahmen der Sicherheitsprüfung selbsttätig zu prüfen, ob die Wahrscheinlichkeit, dass der Genauigkeits-Schätzwert ein zuvor festgelegtes Genauigkeitskriterium erfüllt, ein zuvor festgelegtes Wahrscheinlichkeitskriterium erfüllt,

- das Signal bereitzustellen, wenn das Wahrscheinlichkeitskriterium erfüllt ist, und
- mindestens einen Warnhinweis an den Benutzer auszugeben, wenn das Wahrscheinlichkeitskriterium nicht erfüllt ist.

In einer weiteren Ausführungsform weist das erfindungsgemässe Messgerät eine Eingabeeinheit zum Eingeben des Genauigkeitskriteriums und/oder des Wahrscheinlichkeitskriteriums durch einen Benutzer und eine Speichereinheit zum Speichern des Genauigkeitskriteriums und/oder des Wahrscheinlichkeitskriteriums auf, insbesondere wobei das Genauigkeitskriterium ein Genauigkeits-Schwellenwert ist, und das Genauigkeitskriterium bei einem Unterschreiten des Genauigkeits-Schwellenwertes durch den Genauigkeits-Schätzwert erfüllt ist.

In einer weiteren Ausführungsform weist das erfindungsgemässe Messgerät eine Anzeigeeinheit zum Anzeigen von Messdaten auf. Die Messdaten umfassen insbesondere die azimutale Ausrichtung. Die Anzeigeeinheit ist dabei dazu ausgestaltet, die zu erwartende Genauigkeit und/oder ein Nichterfüllen des Wahrscheinlichkeitskriteriums anstelle der Messdaten oder optisch hervorgehoben zusammen mit den Messdaten anzuzeigen, insbesondere farblich hervorgehoben, blinkend, als graphische Darstellung, und/oder die Messdaten überlagernd. Die Sicherheitskomponente ist dabei dazu ausgestaltet, selbsttätig ein Anzeigen der Wahrscheinlichkeit und/oder des Nichterfüllens des Wahrscheinlichkeitskriteriums durch die Anzeigeeinheit zu veranlassen, wenn das selbsttätige Prüfen ein Nichterfüllen des Wahrscheinlichkeitskriteriums ergeben hat.

In einer weiteren Ausführungsform weist das erfindungsgemässe Messgerät eine Warnsignaleinheit zur Ausgabe eines Warnsignals als Teil des Warnhinweises auf, wobei die Warnsignaleinheit mindestens aufweist

- ein Akustiksignalausgabegerät zur Ausgabe des Warnsignals in Form von durch einen Benutzer wahrnehmbaren akustischen Signalen, und/oder
- einen Vibrationsalarm-Signalgeber zur Ausgabe des Warnsignals in Form von durch einen Benutzer wahrnehmbaren Vibrationen in mindestens einem Teil des Messgerätes.

Die Art des Warnsignals ist dabei vorzugsweise durch den Benutzer auswählbar.

In einer Ausführungsform des erfindungsgemässen Messgerätes weist der Magnetkompass mindestens drei gerätefest angeordnete Messsensoren zum Messen eines Magnetfelds und der Richtung des Gravitationsfelds auf.

In einer Ausführungsform des erfindungsgemässen Messgerätes ist dem Magnetkompass zugeordnet eine Einrichtung zum Kompensieren gerätefester Störfelder vorgesehen, insbesondere sowohl hart- als auch weich-magnetischer Störfelder.

In einer weiteren Ausführungsform des erfindungsgemässen Messgerätes ist die Sicherheitskomponente derart ausgebildet, dass die Genauigkeit basierend auf den Messdaten mehrerer Messungen bei azimutal und vertikal unterschiedlichen Ausrichtungen des Messgeräts selbsttätig festlegbar ist.

Ein weiterer Aspekt der Erfindung betrifft ein Computerprogrammprodukt mit Programmcode, der auf einem maschinenlesbaren Träger gespeichert ist, zur Ausführung des erfindungsgemässen Verfahrens, insbesondere wenn das Programm auf einer als Sicherheitskomponente des erfindungsgemässen Messgeräts ausgebildeten elektronischen Datenverarbeitungseinheit ausgeführt wird.

Nachstehend wird die Erfindung anhand von Figuren näher erläutert. Es zeigen in schematischer Darstellung:

Fig. 1  eine Messanordnung zum Bestimmen von Zielkoordinaten eines entfernten Objekts mit einem Messgerät mit Magnetkompass auf einem Stativ;

Fig. 2  ein Verfahren, bei dem das Messgerät aus Figur 1 drei Mal azimutal unterschiedlich ausgerichtet ist;

Fig. 3  ein Verfahren, bei dem das Messgerät aus Figur 1 drei Mal unterschiedlich um dessen Zielachse gekippt ist;

Fig. 4  ein Verfahren, bei dem das Messgerät aus Figur 1 drei Mal zenital unterschiedlich ausgerichtet ist;

Fig. 5  Verfahren, bei denen das Messgerät an mehreren zueinander benachbarten Messorten Messungen auf denselben Messpunkt ausgerichtet ist;

Fig. 6  die Berechnung einer Wahrscheinlichkeit, dass eine Störung eine Azimutmessung negativ beeinflusst hat;

Fig. 7  zwei Diagramme zur Darstellung der Zunahme von Azimut-Fehlern mit zunehmender Entfernung zum Kompensationsort;

Fig. 8  ein Flussdiagramm zur Illustration eines Verfahrens zur Überwachung der Genauigkeit nach dem Stand der Technik;

Fig. 9a-b      zwei Flussdiagramme zur Illustration je eines beispielhaften erfindungsgemässen Verfahrens;

Fig. 10      eine beispielhafte Darstellung von Messdaten auf einer Anzeigeeinheit des Messgerätes; und

Fig. 11a-e      beispielhafte Warnhinweise in der Darstellung aus Fig. 10.

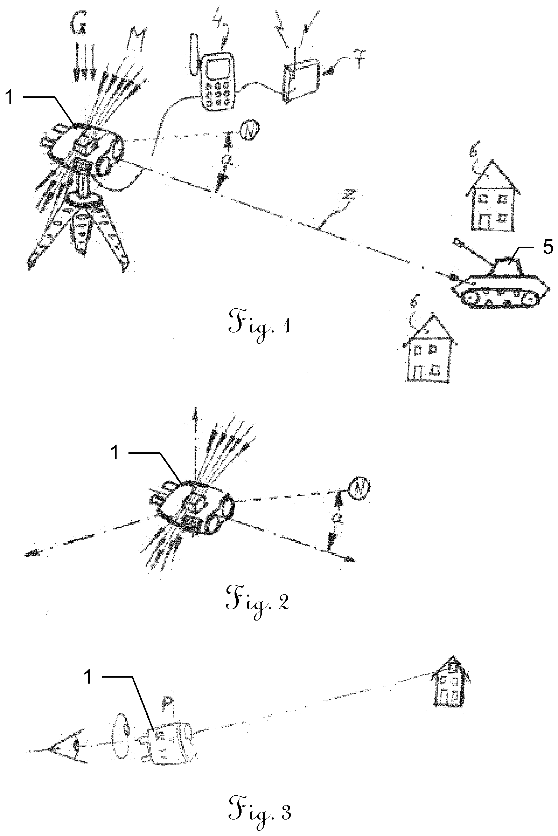

Figur 1 zeigt eine erste Messanordnung zum Bestimmen von Zielkoordinaten eines entfernten Zielobjekts 5. Die Messanordnung weist ein Messgerät 1, das auf einem Stativ 9 aus amagnetischem Material befestigt ist, einen GPS-Empfänger 4 und eine Übertragungseinrichtung 7 auf. Das Zielobjekt 5 wird hier von einem Kettenfahrzeug gebildet, das neben einem Haus 6 in Stellung gegangen ist.

Im Messgerät 1, das hier als Zielfernglas mit einer Zielachse Z ausgebildete ist, ist ein Laserentfernungsmesser und digitaler Magnetkompass 2 integriert. Im Gegensatz zum Laserentfernungsmesser ist der digitale Magnetkompass 2 als kleiner Quader innerhalb des Fernglases zeichnerisch angedeutet. Über den digitalen Magnetkompass 2, der hier drei gerätefest angeordneten Magnetfeldsensoren zum dreidimensionalen Messen eines Magnetfelds M und zwei Neigungssensoren zum Messen der Richtung des Gravitationsfelds G der Erde aufweist, wird die azimutale Ausrichtung a des Messgeräts 1 relativ zu einer kalkulatorischen Nordrichtung N und dessen zenitale Ausrichtung relativ zur einer Lotrechten bestimmt.

Bei der kalkulatorischen Nordrichtung N ist die - in regionalem Massstab ortsabhängige - Missweisung des Erdmagnetfelds gegenüber der geographischen Nordrichtung berücksichtigt. In an sich bekannter Weise kann dies durch Übermitteln eines für die jeweilige Region spezifischen Deklinationswerts vom GPS-Empfänger 4 zum Messgerät 1 praktisch automatisch erfolgen.

Ebenso wie die Berücksichtigung des korrekten Deklinationswerts ist eine korrekte Kompensation gerätefester Störfelder eine Grundvoraussetzung für ein korrektes Bestimmen der azimutalen Ausrichtung, da sich gerätefeste Störfelder in unmittelbarer Nachbarschaft zum Magnetkompass 2 befinden und daher nicht berücksichtigte Änderungen gerätefester Störfelder beachtliche Azimutfehler verursachen können. Auch gerätefeste Störfelder sind hier bei der kalkulatorischen Nordrichtung N berücksichtigt.

Da bei dieser Messanordnung die gerätefesten Störfelder korrekt kompensiert werden und sich keine ortsfesten Störfelder von lokalem Massstab in der Nähe des Messgeräts 1 befinden, liegt ein im Wesentliches homogenes Magnetfeld M, in dem azimutale Ausrichtungen a relativ zueinander korrekt ohne Kreisfehler bestimmt werden können. Diese Homogenität wird zusätzlich durch die Befestigung des Messgeräts 1 auf dem Stativ 9 erhöht, da der Magnetkompass 2 nur innerhalb eines sehr kleinen Messraums von einigen wenigen Zentimetern bewegt werden kann.

Ortsfeste magnetische Störfelder von regionalem Massstab, welche einen konstanten Azimutfehler verursachen, können mit einem der genannten Verfahren zum Schätzen der Genauigkeit azimutaler Ausrichtungen a detektiert und grob abgeschätzt werden. Bei diesem Verfahren wird mit dem digitalen Magnetkompass 2 bei einem Bestimmen einer azimutalen Ausrichtung a gleichzeitig wenigstens eine Feldgrösse des Magnet- und Gravitationsfelds G und M, hier die magnetische Inklination, bereitgestellt. Da hier der Messort, beispielsweise über den GPS-Empfänger 4, dem Messgerät 1 bekannt ist, kann die gemessene magnetische Inklination selbsttätig mit der regional ortsabhängigen magnetischen Inklination eines Modells des Erdmagnetfelds - hier des IGRF-Modells - im Lichte eines vorgegebenen Schwellwerts beurteilt und eine Genauigkeit der azimutalen Ausrichtung a festgesetzt werden.

Ist die Differenz zwischen der beim Bestimmen der azimutalen Ausrichtung a gemessenen magnetischen Inklination und der magnetischen Inklination des IGRF-Modells im Vergleich zum Schwellwert bedeutend, so ist ein ortsfestes magnetisches Störfeld von regionalem Ausmass vorhanden. In diesem Fall ist die Schätzung der Genauigkeit der azimutalen Ausrichtung a durch das Messgerät 1 entsprechend anzupassen.

Ist hingegen die Differenz im Vergleich zum Schwellwert unbedeutend, so dürfte kein bedeutendes, ortsfestes magnetisches Störfeld von regionalem Ausmass vorhanden sein. Da hier zudem kein ortsfestes Störfeld von lokalem Massstab in der Nähe des Messgeräts 1 vorhanden ist und die Missweisung sowie die gerätefesten Störfelder korrekt berücksichtigt sind, kann gemäss einem weiteren Verfahren die Genauigkeit azimutaler Ausrichtungen a entsprechend einer Kompensationsgenauigkeit festgesetzt werden. Diese resultiert aus der arithmetischen Kompensation gerätefester Störfelder und stellt eine Höchstgrenze für die erreichbare Genauigkeit azimutaler Ausrichtungen a dar, wenn gerätefeste Störfelder vorhanden sind und diese beim Bestimmen azimutaler Ausrichtungen a kompensiert werden. Bei der vorliegenden Messanordnung ohne ortsfeste Störfelder wird die Genauigkeit azimutaler Ausrichtungen a in guter Näherung durch die Kompensationsgenauigkeit bestimmt.

Die arithmetische Kompensation gerätefester Störfelder erfolgt gemäss der Offenbarung der DE 196 09 762 C1 über eine Vektorgleichung, deren Parameter mittels eines Optimierungsverfahrens bestimmt wurden. Das Optimierungsverfahren basiert auf Werten einer vorgegebenen Abfolge von Messungen des Magnet- und Gravitationsfelds M und G, bei welcher Abfolge das Messgerät 1 an einem Messort p jeweils unterschiedlich im Raum ausgerichtet ist. Die Kompensationsgenauigkeit wird mit Hilfe eines Verfahrens der statistischen Ausgleichsrechnung geschätzt, welches unter Berücksichtigung der festgelegten Parameter der Vektorgleichung auf den Werten der Abfolge von Messungen basiert.

Nachdem die azimutale Ausrichtung a des auf das Zielobjekt 5 ausgerichteten Messgeräts 1 bestimmt ist, wird an einer Schnittstelle 3 des Messgeräts 1 ein Signal bereitgestellt, das unter anderem die bestimmte azimutale Ausrichtung a und deren geschätzte Genauigkeit umfasst. Das bereitgestellte Signal wird zum GPS-Empfänger 4 übermittelt, dort bei der Berechnung der Zielkoordinaten und deren geschätzter Genauigkeit berücksichtigt und über die Übertragungseinrichtung 7 zu einer (hier nicht dargestellten) Feuerleiteinrichtung übertragen. Anstelle einer militärischen Feuerleiteinrichtung, insbesondere bei zivilen Anwendungen, kann der Empfänger auch ein Geographisches Informationssystem (GIS) oder ein sonstiges Datenverarbeitungssystem bzw. -gerät sein, insbesondere ein handhaltbares Smartphone oder ein Tablet Computer.

Aufgrund der im Messgerät 1 implementierten Verfahren zum Schätzen der Genauigkeit der azimutalen Ausrichtung a, kann die Genauigkeit relativ zuverlässig abgeschätzt werden. Dadurch kann bei einer gegen die Zielkoordinaten geplanten Feuerwirkung ein möglicher Kollateralschaden am Haus 6 rechtzeitig erkannt werden.

Figur 2 zeigt das Messgerät 1 aus Figur 1, mit dem ein weiteres Verfahren zum Schätzen der Genauigkeit azimutaler Ausrichtungen a durchgeführt wird. Dieses Verfahren zum Schätzen der Genauigkeit azimutaler Ausrichtungen a beruht auf einer Beurteilung der Genauigkeit der Kompensation gerätefester Störfelder und bietet sich beispielsweise für stativbasierte Messgeräte gemäss der Figur 1 an.

Bei diesem Verfahren werden mit dem digitalen Magnetkompass 2 drei Kontrollmessungen des Magnet- und Gravitationsfelds M und G am selben Messort P durchgeführt. Dabei wird das Messgerät 1 im Dreitakt jeweils azimutal unterschiedlich im Raum ausgerichtet. Bei jeder Kontrollmessung wird jeweils wenigstens eine Feldgrösse, beispielsweise hier die Horizontalfeldstärke, gemessen. Sind die Parameter der Vektorgleichung zum Kompensieren gerätefester Störfelder korrekt bestimmt, so muss die Horizontalfeldstärke bei den Kontrollmessungen im Wesentlichen jeweils gleich sein, und zwar unabhängig von ortsfesten Störfeldern von regionalem oder lokalem Ausmass.

Die Differenzen der jeweiligen Horizontalfeldstärke, beinhalten Information über eine Änderung gerätefester Störfeldern zwischen dem Zeitpunkt der Festlegung der Parameter und den Kontrollmessungen. Werden diese Differenzen noch im Verhältnis zur Horizontalfeldstärke am Messort beurteilt, so kann zudem Information über mögliche Auswirkungen auf ein Bestimmen der azimutalen Ausrichtung a erhalten werden. Der Arcustangens des Quotienten der jeweiligen Differenz unterschiedlicher Horizontalfeldstärken dividiert durch das Mittel der Horizontalfeldstärken ist dabei ein Mass für die Auswirkungen auf einen möglichen Fehler der azimutalen Ausrichtung a. Damit kann die realisierte Genauigkeit des Kompensierens gerätefester Störfeldern geschätzt werden. So bewirkt beispielsweise dieselbe Differenz von Horizontalfeldstärken in Finnland den doppelten Azimutfehler wie in der Schweiz.

Werden die Differenzen oder die voranstehend erwähnten Quotienten in Relation zu einem vorgegebenen Schwellwert gesetzt, so muss bei einem Überschreiten des Schwellwerts der Schätzwert der Genauigkeit entsprechend herabgesetzt werden. Alternativ dazu kann das Messgerät 1 dem Benutzer vorschlagen, die Parameter der Vektorgleichung zum arithmetischen Kompensieren von gerätefesten magnetischen Störfeldern am Messort P über die vorgegebene Abfolge von Messungen, beispielsweise über eine so genannte Zwölf-Punkt-Kompensation, zu bestimmen.

Es versteht sich von selbst, dass durch Berücksichtigung weiterer Feldgrössen des Magnet- und Gravitationsfelds M und G, beispielsweise der Vertikalfeldstärke oder des Verhältnisses der Horizontalfeld- zur Vertikalfeldstärke, die Qualität der Schätzung der Genauigkeit verbessert werden kann.

Figur 3 zeigt eine alternative Ausführungsform eines Verfahrens zum Schätzen der Genauigkeit azimutaler Ausrichtungen a aus Figur 2, welche ebenfalls auf einer Beurteilung der Genauigkeit der Kompensation gerätefester Störfelder des Messgeräts 1 beruht. Diese Ausführungsform bietet sich primär für handgehaltene Messgeräte an.

Im Gegensatz zum Verfahren aus Figur 2 ist das Messgerät 1 bei dieser Ausführungsform derart ausgerichtet, dass dessen Zielachse Z auf einen festen Messpunkt, hier das Haus 6, zeigt. Bei dieser Ausführungsform wird das Messgerät 1 bei den drei Kontrollmessungen des Magnet- und Gravitationsfelds jeweils unterschiedlich im Dreitakt um die Zielachse Z gekippt. Dadurch werden mit dem digitalen Magnetkompass 2 drei Kontrollmessungen am selben Messort P durchgeführt, bei welchen Messungen das Messgerät dieselbe azimutale Ausrichtung auf das Haus 6 aufweist.

Dadurch können beispielsweise zusätzlich zum Verfahren aus Figur 2 die Unterschiede zwischen dem jeweiligen Produkt der Horizontalfeldstärke und des Sinus der azimutalen Ausrichtung a und/oder dem Produkt der Horizontalfeldstärke und des Kosinus der azimutalen Ausrichtung a in Relation zu einem weiteren Schwellwert gesetzt werden. Aufgrund dieser zusätzlichen Messinformation können die Auswirkungen auf die Genauigkeit beim Bestimmen azimutaler Ausrichtungen a noch zuverlässiger geschätzt werden.

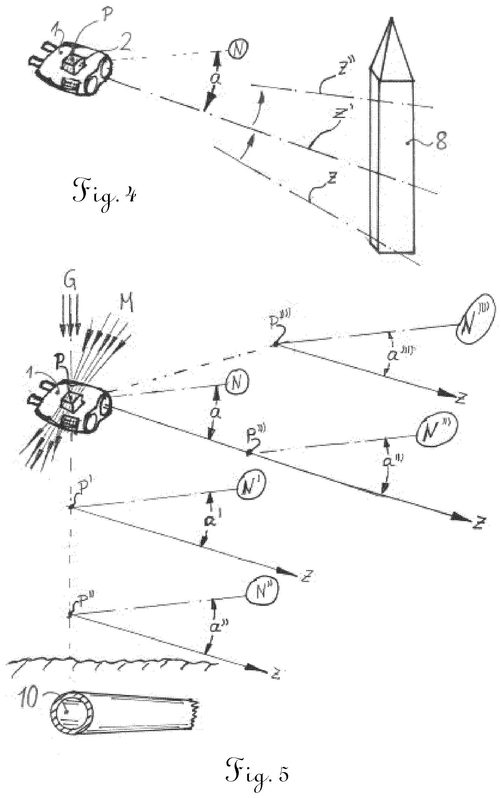

Figur 4 zeigt eine abgewandelte Ausführungsform des Verfahrens zum Schätzen der Genauigkeit aus Figur 3, das ebenfalls auf einer Beurteilung der Genauigkeit der Kompensation gerätefester Störfelder des Messgeräts 1 beruht.

Im Gegensatz zum Verfahren aus Figur 3 wird hier das Messgerät 1 bei den drei Kontrollmessungen des Magnet- und Gravitationsfelds jeweils derart unterschiedlich ausgerichtet, dass die drei unterschiedlich geneigten Zielachsen Z, Z' und Z" dieselbe Lotrechte schneiden. Diese Lotrechte kann, wie hier dargestellt, von einer Kante eines Turms 8 verkörpert werden. Dadurch werden mit dem digitalen Magnetkompass 2 drei Kontrollmessungen am selben Messort P durchgeführt, bei welchen das Messgerät 1 dieselbe azimutale Ausrichtung a hin zur Kante des Turms 8 aufweist. Diese Information kann vergleichbar dem Verfahren von Figur 3 vorteilhaft beim Schätzen der Genauigkeit berücksichtigt werden. Es ist auch denkbar die Verfahren der Figuren 2 bis 4 miteinander zu kombinieren.

Figur 5 zeigt das Messgerät 1 der Figuren 1 bis 4 über einem vergrabenen Gussrohr 10. Durch das Messgerät 1 werden weitere Verfahren zum Schätzen der Genauigkeit azimutaler Ausrichtungen a durchgeführt, die auf einer Beurteilung der Auswirkungen ortsfester magnetischer Störfelder von lokalem Massstab beruhen.

Bei diesen Verfahren ist das Messgerät 1 bei mehreren Messungen an unterschiedlichen, zueinander benachbarten Messorten P, P' oder P", P oder P''' sowie P oder P'''' mit seiner Zielachse Z jeweils auf denselben hier nicht dargestellten Messpunkt, beispielsweise das Haus 6 aus Figur 3, ausgerichtet. Es wäre aber auch denkbar bei diesem Verfahren, vergleichbar den Kontrollmessungen der Figur 4, das Messgerät 1 auf eine lotrechte Kante hin in jeweils unterschiedlicher Höhe auszurichten, da auch auf diese Weise die azimutale Ausrichtung a für die Messungen dieser Verfahren konstant ist.

Diese Verfahren zum Schätzen der Genauigkeit azimutaler Ausrichtungen a beruhen auf einer direkten Überprüfung azimutaler Ausrichtungen a in unmittelbarer Umgebung des Messorts P. Im Gegensatz zu den Verfahren von Figur 1 werden bei diesen Verfahren nicht nur Feldstärkewerte von Magnet- und Gravitationsfeldern M und G zueinander in Beziehung gesetzt, sondern direkt die Grösse der azimutalen Ausrichtung a, deren Genauigkeit mit den genannten Verfahren durch das Messgerät 1 selbsttätig geschätzt wird.

Inhomogenitäten des Magnetfelds M - verursacht durch ortsfeste Störer von lokalem Massstab, hier durch das Gussrohr 10 - können mittels dieser Verfahren detektiert und die Auswirkung auf ein Bestimmen azimutaler Ausrichtungen a in etwa abgeschätzt werden. Ortsfeste Störer von regionalem Massstab oder Änderungen gerätefester Störfelder, haben auf diese Verfahren keinen Einfluss und können mit ihnen nicht detektiert werden.

Es ist von Vorteil, wenn das Zielobjekt, dessen azimutale Ausrichtung bestimmt werden soll, und der Messpunkt, auf den die Zielachse Z bei diesen Verfahren ausgerichtet wird, ähnliche azimutale Ausrichtungen aufweisen.

Bei einer Ausführungsform dieser Verfahren zum Schätzen der Genauigkeit azimutaler Ausrichtungen a wird man beispielsweise vom Messgerät 1 aufgefordert, die Zielachse Z zuerst stehend am Messort P, dann kniend am ersten weiteren Messort P' und zuletzt liegend am zweiten weiteren Messort P" auf jeweils denselben Messpunkt hin auszurichten. Da das Magnetfeld M innerhalb des hier grossen Messraums, von gut eineinhalb Metern Ausdehnung, aufgrund des vom Gussrohr 10 verursachten Störfelds merklich inhomogen ist, weisen die unterschiedlichen Messorte P, P' und P" jeweils unterschiedliche kalkulatorische Nordrichtungen N, N' und N" auf, wodurch unterschiedliche azimutale Ausrichtungen a, a' und a" trotz desselben Messpunkts bestimmt werden. Aufgrund dieser unterschiedlichen azimutalen Ausrichtungen a, a' und a" kann vom Messgerät 1 mittels eines Rechenverfahrens eine Genauigkeit für ein Bestimmen azimutaler Ausrichtungen a am Messort P abgeschätzt werden.

Dies ist besonders für vergrabene Störer geeignet, da hierbei die Messungen in der entscheidenden Wirkrichtung vergrabener Störer vorgenommen werden. Auch sind vergrabene Störer eine bedeutende Fehlerquelle beim Bestimmen azimutaler Ausrichtungen, da sie im Gegensatz zu magnetischen Störern an der Oberfläche in der Regel nicht wahrgenommen werden können.

Bei einer weiteren Ausführungsform dieser Verfahren wird nach einer Messung am Messort P über einen Schritt in Richtung der Zielachse Z ein dritter weiterer Messort P''' aufgesucht und dort eine zweite Messung durchgeführt. Dadurch können Informationen über Auswirkungen des Störfelds des Gussrohrs 10 in einer weiteren räumlichen Dimension gewonnen werden.

Bei einer weiteren Ausführungsform wird nach der Messung am Messort P über einen Schritt senkrecht zur Zielachse Z ein vierter weiterer Messort P'''' aufgesucht und dort die zweite Messung auf den hier vorteilhafter Weise weit entfernten Messpunkt durchgeführt. Dadurch können Informationen über Auswirkungen des Störfelds des Gussrohrs 10 auch noch in der dritten räumlichen Dimension gewonnen werden.

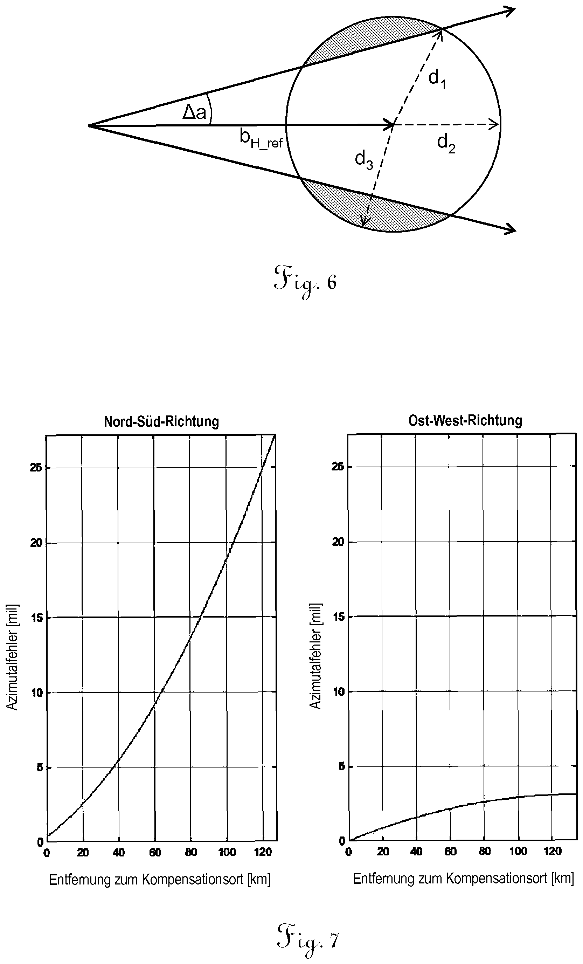

Figur 6 illustriert beispielhaft ein Berechnen eines Wahrscheinlichkeitswertes im Rahmen des erfindungsgemässen Verfahrens. Schematisch dargestellt sind das im Rahmen der Kompensation des Gerätes bestimmte Horizontalreferenzfeld $b_{H\_ref}$, drei beispielhafte mögliche Störungen $d_1$, $d_2$, $d_3$, sowie der Fehler-Schwellenwert $\Delta a$ als (insbesondere durch einen Benutzer festgelegte) akzeptierte Fehler-Obergrenze.

In aus dem Stand der Technik bekannten Verfahren zur Berechnung und Darstellung einer zu erwartenden Genauigkeit wird dem Benutzer ein bestimmter Genauigkeits-Schwellenwert garantiert, z. B. eine maximal mögliche Abweichung von einem Zielwert. De facto ist eine hundertprozentige Garantie eines bestimmten Schwellenwertes der Azimutmessungen allerdings nicht möglich. Erfindungsgemäss werden daher keine solchen Schwellenwerte berechnet sondern Wahrscheinlichkeiten. Ein solcher Wahrscheinlichkeitswert hat den Vorteil, dass beim Benutzer eine bessere Betrachtungsweise über die zu erwartende Genauigkeit bewirkt werden kann.

Um den Wahrscheinlichkeitswert zu berechnen, muss zuvor mit dem Fehler-Schwellenwert Aa, den ein Azimutfehler maximal haben darf, eine bestimmte Obergrenze festgelegt werden. Dies kann z. B. durch eine Eingabe durch den Benutzer erfolgen. Wird nach Eingabe des Fehler-Schwellenwertes $\Delta a$ eine Messung durchgeführt, gibt der Rückgabewert des Kompasses darüber Auskunft, wie hoch die Wahrscheinlichkeit ist, dass das Messergebnis innerhalb des gesetzten Fehler-Schwellenwertes $\Delta a$ liegt. Dieser Rückgabewert wird mit der Formel

$$p[\%] = 100 \cdot \left( 1 - \frac{\sin(\Delta a)}{\sin(wc)} \right)$$

berechnet, wobei $p[\%]$ als der dem Benutzer angezeigte Rückgabewert die Wahrscheinlichkeit in Prozent ist, $\Delta a$ der vom Benutzer eingegebene Fehler-Schwellenwert und $wc$ der maximal mögliche ($wc$ = worst case) Azimutwinkelfehler. Mit dieser Formel wird also berechnet, wie hoch die Wahrscheinlichkeit ist, dass eine Störung die Azimutmessung im Rahmen des schlimmsten Falls negativ beeinflusst hat.

Dabei wird der Fehler-Schwellenwert $\Delta a$, der den maximal akzeptierten Azimutwinkelfehler darstellt, wird beispielsweise durch den Benutzer festgelegt. Der maximal mögliche Azimutwinkelfehler $wc$ kann vorzugsweise basierend auf dem Unterschied zwischen dem Horizontalreferenzfeld $b_{H\_ref}$ und dem aktuell gemessenen Horizontalfeld $b_H$ berechnet werden:

$$\sin(wc) = \frac{\left| \left( \left| b_{H\_ref} \right| - \left| b_H \right| \right) \right|}{\left| b_H \right|} .$$

Als Referenzhorizontalfeld $b_{H\_ref}$ gilt dasjenige Feld, das zuvor bei der Kompensation des Gerätes bestimmt wurde. Ausgehend vom Referenzhorizontalfeld $b_{H\_ref}$ und unter der Annahme, dass eine Störung $d$ in eine unbekannte Richtung zeigt, so gilt für das Horizontalfeld $b_H$:

$$\left| b_H \right| = \left| b_{H\_ref} \right| + \left| d \right| .$$

Betrachten wir nun Figur 6, so ist ersichtlich, dass in den schraffierten Kreissegmenten der maximal erlaubte Azimutfehler grösser ist als vom Benutzer durch den Fehler-Schwellenwert $\Delta a$ festgelegt. Unter der Annahme, dass die Richtungen der möglichen Störungen $d_1$, $d_2$, $d_3$ gleichverteilt sind, ist die Aussage möglich, dass die Wahrscheinlichkeit einer ausreichend korrekten Messung durch das Verhältnis von nicht schraffierter Kreisfläche zu gesamter Kreisfläche gegeben ist. In Figur 6 ist die Wahrscheinlichkeit einer ausreichend korrekten Messung also nur bei $d_3$ nicht gegeben. Generell kann hier angemerkt werden, dass bei einer Änderung der Horizontalfeldstärke, mit einer gewissen Wahrscheinlichkeit ein Azimutfehler auftritt. Zudem kann der Darstellung entnommen werden, dass es Fälle gibt, wo $b_H$ zwar grösser ist als $b_{H\_ref}$, jedoch kein Azimutfehler vorliegt, dies ist z. B. bei $d_2$ der Fall, wo gilt:

$$\left| b_H \right| = \left| b_{H\_ref} \right| + \left| d_2 \right| .$$

Optional fliesst bei der Berechnung des maximal möglichen Winkelfehlers $wc$ zusätzlich die Änderung der Vertikalkomponente $b_V$ des Magnetfeldes mit ein:

$$\sin(wc) = \frac{\sqrt{\left( \left| b_{H\_ref} \right| - \left| b_H \right| \right)^2 + \left( \left| b_{V\_ref} \right| - \left| b_V \right| \right)^2}}{\left| b_H \right|} .$$

Figur 7 zeigt zwei Diagramme, anhand derer dargestellt wird, wie sich der Fehler im Azimut entwickelt, wenn man sich von einer Position in den mittleren Breiten in Nord-Süd- bzw. Ost-West-Richtung bewegt. Der Berechnung liegen die Daten des IGRF-Modells zugrunde. Entfernt man sich lokal vom Kompensationsort, so muss das Messgerät wieder von neuem kompensiert werden. Gemäss einer Ausführungsform der Erfindung wird der Benutzer gewarnt, wenn er eine neue Kompensation durchführen muss.

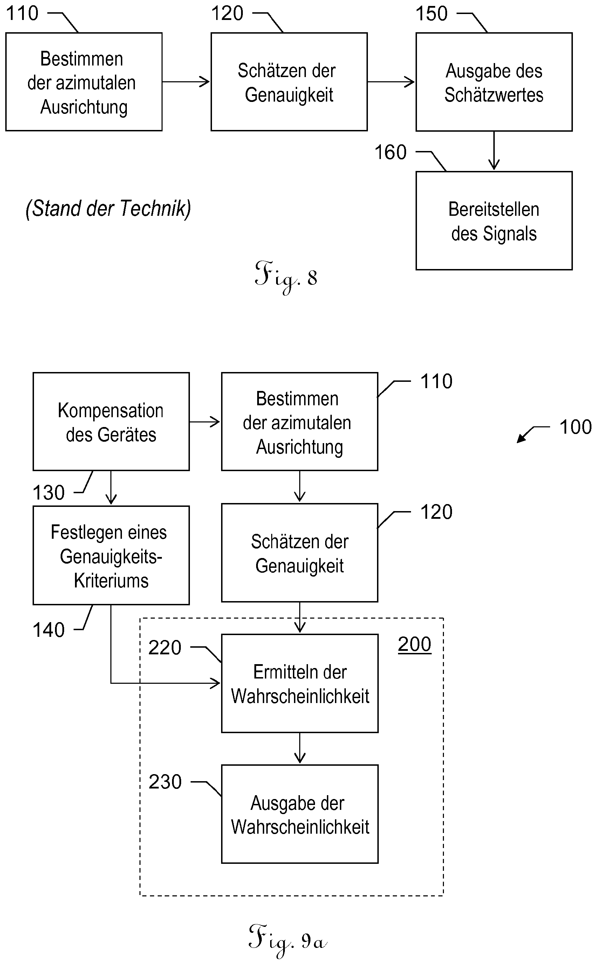

Figur 8 zeigt anhand eines Flussdiagramms vereinfacht die wesentlichen Schritte eines Verfahrens zur Überwachung der Genauigkeit der Ausrichtung eines tragbaren Messgeräts gemäss der US 7,325,320 B2. Das gezeigte Verfahren umfasst die folgenden Schritte:

- Die azimutalen Ausrichtungen des kompensierten Gerätes werden durch Messen eines Magnet- und Gravitationsfelds über einen elektronischen Magnetkompass bestimmt (110);

- anschliessend wird selbsttätig durch das Messgerät ein Wert der Genauigkeit geschätzt (120);

- dieser Schätzwert wird dem Benutzer bereitgestellt (150); und

- schliesslich wird ein Signal mit Information über die azimutale Ausrichtung und evtl. weitere Messdaten und/oder der Schätzwert an einer Schnittstelle des Messgeräts bereitgestellt (160), z. B. zur Weiterleitung an ein Geographisches Informationssystem oder eine militärische Feuerleiteinrichtung.

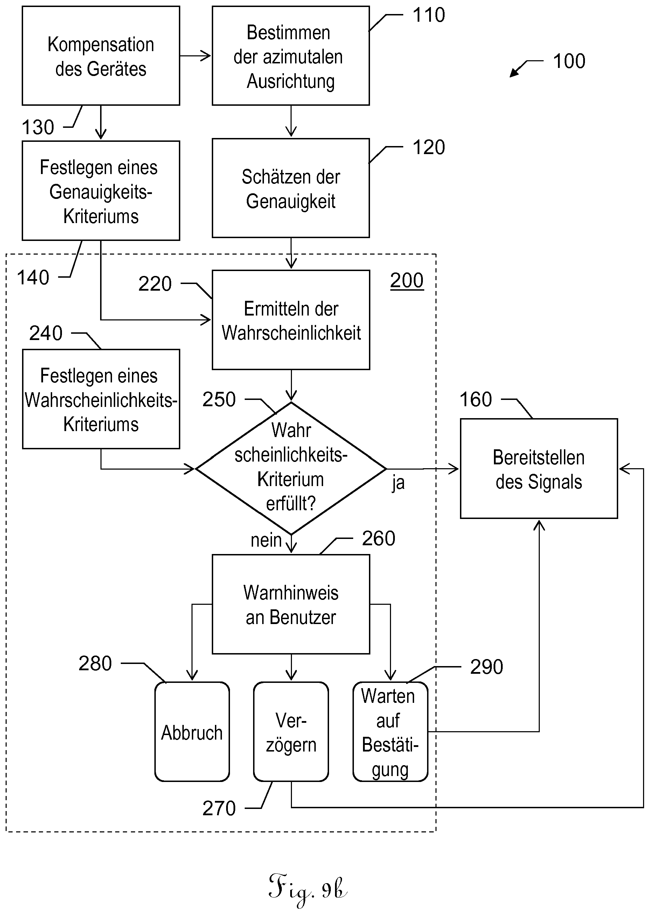

In den Figuren 9a und 9b wird jeweils anhand eines Flussdiagramms eine beispielhafte Ausführungsform eines erfindungsgemässen Verfahrens 100 gezeigt.

Figur 9a illustriert eine erste beispielhafte Ausführungsform des erfindungsgemässen Verfahrens 100. Gemäss dieser einfachen Ausführungsform des Verfahrens führt der Benutzer vor Ort zunächst eine Kompensation 130 des Messgerätes bzw. dessen eingebauten digitalen Kompasses durch, wobei ein Referenzfeld ermittelt wird. Anschliessend wird durch den Benutzer ein Genauigkeitskriterium festgesetzt 140. Das Genauigkeitskriterium ist insbesondere ein situationsabhängiger Schwellenwert (oder -bereich) für die zu ermittelnde azimutale Genauigkeit. Der Benutzer kann das Genauigkeitskriterium natürlich auch vor dem Kompensieren festlegen. Alternativ kann auch ein vorgegebener Wert fest im Gerät kodiert sein. Mit dem kompensierten Gerät wird in Schritt 110 eine azimutale Ausrichtung des Gerätes bestimmt, beispielsweise im Zusammenhang mit einer Messung zu einem entfernten Ziel. Anschliessend wird in Schritt 120 durch das Gerät selbsttätig die Genauigkeit geschätzt.

Erfindungsgemäss weist das Verfahren 100 eine Sicherheitsprüfung 200 auf. Dabei wird durch das Messgerät selbsttätig ermittelt 220, wie hoch die Wahrscheinlichkeit ist, dass ein in Schritt 120 ermittelter Genauigkeits-Schätzwert das in Schritt 140 festgelegte Genauigkeitskriterium erfüllt. Dies kann insbesondere wie mit Bezug zu Figur 6 dargestellt, erfolgen. Die ermittelte Wahrscheinlichkeit wird dann schliesslich als Rückgabewert einem Benutzer bereitgestellt 230.

Figur 9b illustriert eine zweite beispielhafte Ausführungsform des erfindungsgemässen Verfahrens 100. Dabei werden analog zur ersten Ausführungsform aus Figur 9a zunächst die Schritte 110, 120, 130 und 140 ausgeführt. In dieser Ausführungsform wird zusätzlich in Schritt 160 ein Signal mit Messdaten über eine Schnittstelle des Gerätes ausgegeben. Zuvor führt das Gerät erfindungsgemäss selbsttätig eine Sicherheitsprüfung 200 durch.

Im Rahmen dieser Sicherheitsprüfung 200 wird - wie auch in der ersten Ausführungsform - zunächst durch das Gerät selbsttätig ermittelt 220, wie hoch die Wahrscheinlichkeit ist, dass ein in Schritt 120 ermittelter Genauigkeits-Schätzwert das in Schritt 140 festgelegte Genauigkeitskriterium erfüllt. Zusätzlich wird ein WahrscheinlichkeitsKriterium bereitgestellt 240. Dieses kann, wie auch das Genauigkeits-Kriterium, durch den Benutzer festgelegt oder aber fest im Gerät kodiert sein. Anschliessend erfolgt eine Prüfung 250, ob die ermittelte Wahrscheinlichkeit dieses Kriterium erfüllt, z. B. ob die Wahrscheinlichkeit oberhalb eines durch den Benutzer festgelegten Schwellenwerts oder - bereichs liegt, d. h. insbesondere ob die ermittelte Wahrscheinlichkeit für den vorliegenden Vermessungszweck hoch genug ist. Ist dies der Fall, wird das Signal wie vorgesehen bereitgestellt 160; wenn nicht, erfolgt zunächst mindestens ein Warnhinweis 260 an den Benutzer - wobei im Rahmen des Warnhinweises optional die ermittelte Wahrscheinlichkeit als Rückgabewert bereitgestellt werden kann.

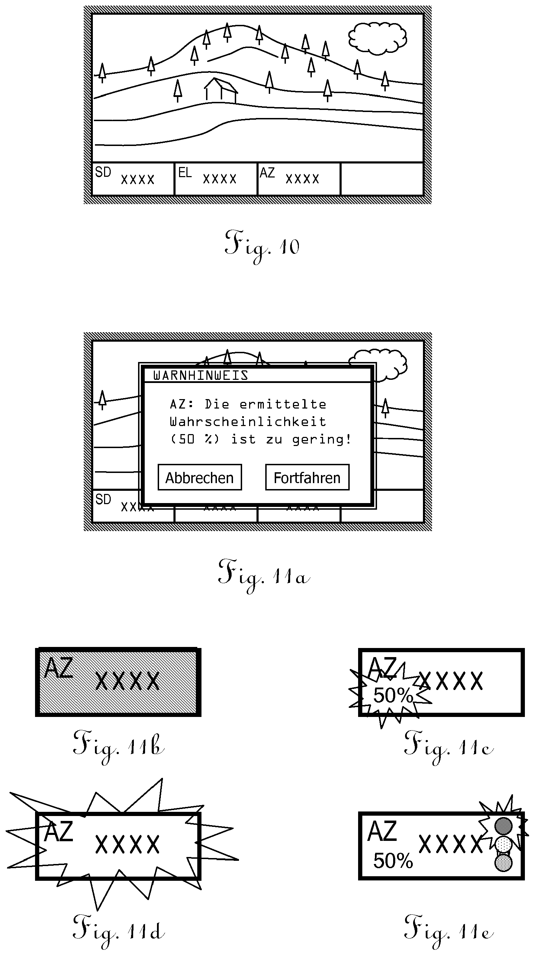

Der Warnhinweis 260 ist vorzugsweise so ausgestaltet, dass er weder von einem unerfahrenen Benutzer übersehen noch von einem routinierten Benutzer einfach ignoriert werden kann. Neben optischen Warnsignalen wie leuchtenden LEDs, kommen je nach Einsatzgebiet des Gerätes auch akustische Signale, z. B. Pieptöne oder gesprochene Warnhinweise, oder ein Vibrationsalarm in Frage. Vorzugsweise kann die Art, Dauer und Intensität des Warnsignals durch den Benutzer einstellbar sein. Werden dem Benutzer die Messdaten auf einem Bildschirm des Gerätes oder eines Bedienteils angezeigt oder in eine Optik des Gerätes eingespiegelt, kann der Warnhinweis 260 dem Benutzer vorzugsweise auf derselben Anzeigevorrichtung angezeigt werden wie die Messdaten (dies ist in den Figuren 11a-e gezeigt).

Das festgelegte Genauigkeitskriterium kann z. B. ein Schwellenwert sein, der beispielsweise eine maximal erlaubte Fehlerobergrenze definiert. Führt der Anwender mit dem gezeigten Verfahren eine Messung durch, so erhält er als Warnhinweis 260 beispielsweise eine Prozentangabe, die ihm anzeigt, wie hoch die Wahrscheinlichkeit ist, dass seine Messung den gesetzten Schwellenwert erreicht (bzw. nicht erreicht) hat. Die Berechnung basiert auf einem Vergleich zwischen dem aktuellem Horizontalfeld und dem Referenzfeld, das während der Kompensation berechnet wurde.

Dabei kann der Warnhinweis 260 die Anzeige der Messdaten vollständig oder vorübergehend ersetzen, oder der Warnhinweis wird zusammen mit den Messdaten aber optisch hervorgehoben dargestellt. Dazu kann der Warnhinweis beispielsweise blinkend, farblich hervorgehoben oder als grossflächige graphische Darstellung angezeigt werden. Ebenso kann der Warnhinweis in einem Pop-Up-Fenster angezeigt werden, das die Messdaten optional ganz oder teilweise überlagert.

Zusätzlich zur Ausgabe eines Warnhinweises 260 greift das Messgerät im hier gezeigten Verfahren zusätzlich in die Bereitstellung 160 des Signals ein. Dargestellt sind drei beispielhafte Alternativen. Zum einen kann das Gerät eine Verzögerung 270 des Signals bewirken, um dem Benutzer die Möglichkeit zu geben, auf das Warnsignal zu reagieren, beispielsweise um selbständig zu entscheiden, ob das Signal bereitgestellt werden soll oder nicht. Zum anderen kann das Gerät einen Abbruch 280 der Messung bewirken, sodass kein Signal versendet wird. Ausserdem kann das Gerät den Benutzer auffordern, eine Entscheidung zu treffen, und das Versenden des Signals bis zur Bestätigung 290 durch den Benutzer aufschieben.

Beispielsweise kann der Warnhinweis 260 eine Aufforderung an den Benutzer umfassen, eine neue Kompensation 130 des Gerätes durchzuführen. In einer Ausführungsform kann dann das Gerät die Bereitstellung 160 von Daten verweigern, bis der Benutzer diese Kompensation 130 durchgeführt hat.

Vorzugsweise können mehrere Alternativen verfügbar sein. Beispielsweise kann in einem Menü des Gerätes durch den Benutzer aus den drei dargestellten Alternativen 270, 280, 290 oder auch weiteren ausgewählt werden.

In einer Ausführungsform des Verfahrens wählt der Benutzer als Wahrscheinlichkeitskriterium einen Schwellenbereich, d. h. mindestens einen oberen und einen unteren Schwellenwert. Das Warnsignal kann dann z. B. mit einem Ampel-Signal dargestellt werden: Liegt die ermittelte Wahrscheinlichkeit unterhalb des Schwellenbereichs, kann das Warnsignal dann beispielsweise ein rotes Signal umfassen, liegt sie im Schwellenbereich, ein gelbes Signal, und liegt sie darüber, ein grünes. Auch kann die Art des Eingreifens entsprechend angepasst sein: Beispielsweise kann bei einem Unterschreiten des Schwellenbereichs durch die ermittelte Wahrscheinlichkeit automatisch ein Abbruch 280 erfolgen, und ein Abfragen 290 einer Benutzerbestätigung, wenn die ermittelte Wahrscheinlichkeit zwischen den beiden Schwellenwerten liegt. Alternativ erfolgt die Abfrage bei einem Unterschreiten des Schwellenbereichs, und bei einem Erreichen des Schwellenbereichs erfolgt nur der Warnhinweis 260, eventuell verknüpft mit einer selbsttätigen Verzögerung 270.

Figur 10 zeigt eine Anzeigeeinheit (Display) des Messgerätes 1. Das Display kann sowohl in das Messgerät 1 eingebaut sein, als auch zu einer externen Bedieneinheit des Messgerätes 1 gehören. Auf dem Display werden Messdaten und weitere Informationen angezeigt, hier - rein beispielhaft - ein Bild einer Übersichtkamera des Messgerätes. Im unteren Bereich ist unter anderem ein Anzeigefeld für die durch den Magnetkompass ermittelte azimutale Ausrichtung des Messgerätes vorgesehen (Feld "AZ").

In den Figuren 11a-e sind verschiedene Möglichkeiten dargestellt, einen Warnhinweis optisch hervorgehoben so anzuzeigen, dass er von einem Benutzer nicht übersehen wird.

In Figur 11a wird der Warnhinweis in Form eines Pop-Up-Fensters angezeigt, das die Messdaten und die übrige Anzeige zu einem wesentlichen Teil überlagert. Das Fenster muss durch den Benutzer aktiv geschlossen werden. In diesem Beispiel wird die zu erwartende Genauigkeit zusammen mit dem Warnhinweis angezeigt, und der Benutzer hat die Wahl, den Vorgang abzubrechen - z. B. um das Gerät neu zu kompensieren - oder fortzufahren und damit den Wert trotz des Warnhinweises zu akzeptieren und das Bereitstellen eines Signals auszulösen.

In den Figuren 11b, 11c, 11d und 11e ist nur das Anzeigefeld für die durch den Magnetkompass ermittelte azimutale Ausrichtung des Messgerätes dargestellt. In Figur 11b ist dieses Feld farblich durch eine Signalfarbe, beispielsweise ein leuchtendes Rot, hervorgehoben (hier schraffiert dargestellt). In Figur 11c ist in dem Anzeigefeld zusätzlich ein Wert für die ermittelte Wahrscheinlichkeit (hier beispielhaft: "50 %") angezeigt, für den Benutzer optisch hervorgehoben durch ein Blinken der Prozentangabe. In Figur 11d wird das gesamte Anzeigefeld blinkend dargestellt. In Figur 11e wird zum einen ein Wert für die ermittelte Wahrscheinlichkeit angezeigt, und zum anderen eine Ampel mit je einem roten, gelben und grünen Feld: ist (wie hier gezeigt) ein unterer Wahrscheinlichkeits-Schwellenwert (z. B. 75 %) unterschritten, leuchtet das rote Feld, ist ein oberer Wahrscheinlichkeits-Schwellenwert (z. B. 90 %) aber nicht der untere unterschritten, leuchtet das gelbe Feld, und ist das Wahrscheinlichkeitskriterium erfüllt, leuchtet das grüne Feld.

Die gezeigten Varianten sind rein beispielhaft, der Warnhinweis kann auch durch andere, z. B. grafische Darstellungen erfolgen, wie z. B. eine Skala mit einem Balken. Ebenso sind auch diverse Kombinationen dieser Darstellungen denkbar.

Ebenso können zur Unterstützung oder anstelle der optischen Darstellung des Warnhinweises je nach Anwendungsgebiet weitere nicht-optische Signale ausgegeben werden, insbesondere akustische Signale oder ein Vibrationsalarm. Ein Vibrationsalarm kann insbesondere bei militärischen Anwendungen vorteilhaft sein, wenn optische oder akustische Signale die eigene Position verraten könnten.

Es versteht sich, dass diese dargestellten Figuren nur mögliche Ausführungsbeispiele schematisch darstellen. Die verschiedenen Ansätze können ebenso miteinander wie mit Verfahren und Geräten des Stands der Technik kombiniert werden.

**Patentansprüche**

1. Verfahren (100) zur Überwachung der Genauigkeit der mittels eines elektronischen Magnetkompasses (2) zu bestimmenden (110) azimutalen Ausrichtung (a) eines handhaltbaren optoelektronischen Messgeräts (1), mit einem selbsttätigen Ermitteln (120) eines GenauigkeitsSchätzwertes durch das Messgerät (1) basierend auf Messdaten des Magnetkompasses (2),

**gekennzeichnet durch**

- ein Festlegen (140) einer Obergrenze für einen Azimutfehler als ein Genauigkeitskriterium,
- ein Ermitteln eines maximal möglichen Azimutwinkelfehlers, und
- eine Sicherheitsprüfung (200), im Rahmen derer

- durch das Messgerät (1) selbsttätig eine Wahrscheinlichkeit ermittelt wird (220), dass der Genauigkeits-Schätzwert das Genauigkeitskriterium erfüllt, und
- die ermittelte Wahrscheinlichkeit als Rückgabewert einem Benutzer bereitgestellt wird (230),

wobei die Wahrscheinlichkeit basierend auf der Formel

$$p[\%] = 100 \cdot \left(1 - \frac{\sin(\Delta a)}{\sin(wc)}\right)$$

berechnet wird, wobei *p[%]* die dem Benutzer bereitgestellte Wahrscheinlichkeit in Prozent ist, *Δa* die Obergrenze für einen Azimutfehler, und *wc* der maximal mögliche Azimutwinkelfehler.

2. Verfahren (100) nach Anspruch 1,
   **dadurch gekennzeichnet, dass**
   die Obergrenze für einen Azimutfehler ein durch den Benutzer festgelegtes Genauigkeitskriterium ist.

3. Verfahren (100) nach Anspruch 1 oder Anspruch 2,
   **dadurch gekennzeichnet, dass**
   im Rahmen der Sicherheitsprüfung (200) durch das Messgerät (1) ein selbsttätiges Prüfen (250) erfolgt, ob die Wahrscheinlichkeit, dass der Genauigkeits-Schätzwert ein zuvor festgelegtes Genauigkeitskriterium erfüllt, ein zuvor festgelegtes Wahrscheinlichkeitskriterium erfüllt, wobei

   - wenn das Wahrscheinlichkeitskriterium erfüllt ist, das Messgerät (1) einem externen Empfänger an einer Schnittstelle des Messgerätes (1) selbsttätig ein Signal bereitstellt (160), das mindestens Information über die azimutale Ausrichtung (a) umfasst, und
   - wenn das Wahrscheinlichkeitskriterium nicht erfüllt ist, das Messgerät (1) auf einer Anzeigevorrichtung oder mittels einer Warnsignaleinheit des Messgerätes (1) selbsttätig einen Warnhinweis an den Benutzer ausgibt (260).

4. Verfahren (100) nach Anspruch 3,
   **dadurch gekennzeichnet, dass**,
   wenn das Wahrscheinlichkeitskriterium nicht erfüllt ist, durch das Messgerät (1) selbsttätig ein Verzögern (270) oder Verhindern (280) des Bereitstellens (160) des Signals erfolgt.

5. Verfahren (100) nach Anspruch 3 oder Anspruch 4,
   **dadurch gekennzeichnet, dass**,
   wenn das Wahrscheinlichkeitskriterium nicht erfüllt ist, der Warnhinweis (260) eine Aufforderung zum Kompensieren (130) des Messgerätes (1) umfasst.

6. Verfahren (100) nach Anspruch 4 oder Anspruch 5,
   **dadurch gekennzeichnet, dass**
   bis zu einem Kompensieren (130) des Messgerätes (1) das Messgerät (1) selbsttätig ein Bereitstellen (160) eines Signals verhindert (280).

7. Verfahren (100) nach Anspruch 6,
   **dadurch gekennzeichnet, dass**
   das Signal den Genauigkeits-Schätzwert, das Genauigkeitskriterium und/oder eine durch das Messgerät (1) ermittelte Richtung und Entfernung zu einem Ziel umfasst,

8. Verfahren (100) nach einem der Ansprüche 3 bis 7,
**dadurch gekennzeichnet, dass**
der Warnhinweis (260) an den Benutzer mindestens ein Warnsignal in Form eines akustischen Signals, welches durch ein Akustiksignalausgabegerät der Warnsignaleinheit ausgegeben wird, und/oder eines Vibrationsalarms, welcher durch einen Vibrationsalarm-Signalgeber der Warnsignaleinheit ausgegeben wird, umfasst.

9. Verfahren (100) nach Anspruch 8,
**dadurch gekennzeichnet, dass**
die Art des Warnsignals durch den Benutzer auswählbar ist.

10. Verfahren (100) nach einem der Ansprüche 3 bis 9, wobei dem Benutzer Messdaten am Messgerät (1) angezeigt werden,
**dadurch gekennzeichnet, dass**
der Warnhinweis (260) an den Benutzer mindestens ein Anzeigen der ermittelten Wahrscheinlichkeit und/oder des Nichterfüllens des Wahrscheinlichkeitskriteriums umfasst, wobei die ermittelte Wahrscheinlichkeit und/oder das Nichterfüllen des Wahrscheinlichkeitskriteriums

- anstelle der Messdaten oder
- optisch hervorgehoben zusammen mit den Messdaten durch dieselben Anzeigemittel des Messgerätes (1) angezeigt werden wie die Messdaten.

11. Verfahren (100) nach Anspruch 10,
**dadurch gekennzeichnet, dass**
die ermittelte Wahrscheinlichkeit und/oder das Nichterfüllen des Wahrscheinlichkeitskriteriums auf demselben Display oder eingespiegelt in dieselbe Optik des Messgerätes (1) wie die Messdaten angezeigt werden, sowie

- farblich hervorgehoben,
- blinkend,
- als graphische Darstellung, und/oder
- die Messdaten überlagernd.

12. Verfahren (100) nach einem der vorangehenden Ansprüche, **gekennzeichnet durch**

- eine Kompensation (130) des Messgerätes (1) vor dem Bestimmen (110) der azimutalen Ausrichtung (a), und
- ein benutzergesteuertes Festlegen des Genauigkeitskriteriums (140) und/oder des Wahrscheinlichkeitskriteriums (240).

13. Verfahren (100) nach Anspruch 12,
**dadurch gekennzeichnet, dass**
das benutzergesteuerte Festlegen ein Abfragen des Genauigkeitskriteriums und/oder des Wahrscheinlichkeitskriteriums durch das Messgerät (1) und eine Eingabe des Genauigkeitskriteriums und/oder des Wahrscheinlichkeitskriteriums durch einen Benutzer des Messgerätes (1) aufweist, wobei das Genauigkeitskriterium mindestens einen Genauigkeits-Schwellenwert umfasst, und das Genauigkeitskriterium erfüllt ist, wenn die zu erwartende Genauigkeit den Genauigkeits-Schwellenwert erreicht oder überschreitet.

14. Verfahren (100) nach einem der vorangehenden Ansprüche,
**dadurch gekennzeichnet, dass**

- das Messgerät (1) zum Erlangen der Messdaten des Magnetkompasses (2) mehrmals unterschiedlich azimutal und zenital ausgerichtet wird, und/oder
- der Genauigkeits-Schätzwert basierend auf Messdaten des Magnetkompasses (2) für ein Kompensieren gerätefester, hart- und weichmagnetischer Störfelder vom Messgerät (1) selbsttätig ermittelt wird.

15. Computerprogrammprodukt mit Programmcode, der auf einem maschinenlesbaren Träger gespeichert ist, zur Ausführung des Verfahrens nach einem der Ansprüche 1 bis 14.

**Claims**

1. Method (100) for monitoring the accuracy of the azimuthal orientation (a) of a handheld optoelectronic measuring device (1) to be determined (110) by means of an electronic magnetic compass (2), including an automatic ascertainment (120) of an estimated accuracy value by the measuring device (1) based on measured data of the magnetic compass (2),
   **characterized by**

   - defining (140) an upper limit for an azimuth error as an accuracy criterion,
   - determining a maximum possible azimuth angle error, and
   - a safety check (200), within the scope of which

     - a probability that the estimated accuracy value meets a previously determined (140) accuracy criterion is automatically ascertained (220) by the measuring device (1), and
     - the ascertained probability is provided (230) to a user as a return value,

   wherein the probability is calculated based on the formula

   $$p[\%] = 100 \cdot \left(1 - \frac{\sin(\Delta a)}{\sin(wc)}\right)$$

   where *p[%]* is the probability provided to the user in percent, $\Delta a$ is the upper limit for an azimuth error, and *wc* is the maximum possible azimuth angle error.

2. Method (100) according to claim 1,
   **characterized in that**
   the defined upper limit for an azimuth error is an accuracy criterion determined by the user.

3. Method (100) according to claim 1 or claim 2,
   **characterized in that**
   an automatic check (250) is carried out by the measuring device (1) within the scope of the safety check (200) of whether the probability, that the estimated accuracy value meets a previously determined accuracy criterion, meets a previously determined probability criterion, wherein

   - if the probability criterion is met, the measuring device (1) automatically provides (160) a signal to an external receiver at an interface of the measuring device (1), which signal includes at least information about the azimuthal orientation (a), and
   - if the probability criterion is not met, the measuring device (1) automatically outputs (260) a warning message to the user on a display unit or by means of a warning signal unit of the measuring device (1).

4. Method (100) according to claim 3,
   **characterized in that,**
   if the probability criterion is not met, a delay (270) or prevention (280) of the provision (160) of the signal, or a request (290) to the user to confirm the provision (160) of the signal, is automatically carried out by the measuring device (1).

5. Method (100) according to claim 3 or claim 4,
   **characterized in that,**
   if the probability criterion is not met, the warning message (260) includes a request for the compensation (130) of the measuring device (1).

6. Method (100) according to claim 4 or claim 5,
   **characterized in that**
   the measuring device (1) automatically prevents (280) a provision (160) of a signal pending a compensation (130) of the measuring device (1).

7. Method (100) according to claim 6,

**characterized in that**
the signal includes the estimated accuracy value, the accuracy criterion, and/or a direction and distance from a target ascertained by the measuring device (1).

8. Method (100) according to any one of claims 3 to 7,
**characterized in that**
the warning message (260) to the user includes at least one warning signal in the form of an acoustic signal, which is output by an acoustic signal output device of the warning signal unit, and/or a vibration alarm, which is output by a vibration alarm signal provider of the warning signal unit.

9. Method (100) according to claim 8,
**characterized in that**
the kind of warning signal is selectable by the user.

10. Method (100) according to any one of claims 3 to 9, wherein measured data are displayed to the user on the measuring device (1),
**characterized in that**
the warning message (260) to the user includes at least a display of the ascertained probability and/or the non-fulfillment of the probability criterion, wherein the ascertained probability and/or the non-fulfillment of the probability criterion are displayed

- instead of the measured data, or
- visually highlighted together with the measured data by the same display means of the measuring device (1) as the measured data.

11. Method (100) according to claim 10,
**characterized in that**
the ascertained probability and/or the non-fulfillment of the probability criterion are displayed on the same display or reflected into the same optics of the measuring device (1), and

- highlighted in color,
- blinking,
- as a graphical depiction, and/or
- superimposed on the measured data.

12. Method (100) according to any one of the preceding claims,
**characterized by**

- a compensation (130) of the measuring device (1) before the determination (110) of the azimuthal orientation (a), and
- a user-controlled determination of the accuracy criterion (140) and/or the probability criterion (240).

13. Method (100) according to claim 12,
**characterized in that**
the user-controlled determination comprises a query of the accuracy criterion and/or the probability criterion by the measuring device (1), and an input of the accuracy criterion and/or the probability criterion by a user of the measuring device (1), wherein the accuracy criterion includes at least one accuracy threshold value, and the accuracy criterion is met if the expected accuracy reaches or exceeds the accuracy threshold value.

14. Method (100) according to any one of the preceding claims,
**characterized in that**

- for obtaining the measured data of the magnetic compass (2), the measuring device (1) is set up with different azimuthal and zenithal orientation multiple times, and/or
- the estimated accuracy value is automatically ascertained by the measuring device (1) for a compensation of magnetically hard and magnetically soft stray fields relating to the device itself, based on measured data of the magnetic compass (2).

15. Computer program product including program code which is stored on a machine-readable carrier, for executing the method according to any one of claims 1 to 14.

**Revendications**

1. Procédé (100) pour surveiller la précision de l'orientation azimutale (a) d'un appareil de mesure optoélectronique portatif (1) à déterminer (110) au moyen d'une boussole magnétique électronique (2), avec une détermination automatique (120) d'une estimation de précision par l'appareil de mesure (1) sur la base de données de mesure de la boussole magnétique (2),
   **caractérisé par**

   - la définition (140) d'une limite supérieure pour une erreur azimutale comme critère de précision,
   - la détermination d'une erreur maximale possible de l'angle d'azimut, et
   - un contrôle de sécurité (200), dans le cadre duquel

     - une probabilité que l'estimation de précision satisfait au critère de précision est déterminée automatiquement (220) par l'appareil de mesure (1) et
     - la probabilité déterminée est mise à la disposition (230) d'un utilisateur comme valeur de retour,

   la probabilité étant calculée sur la base de la formule

   $$p[\%] = 100 \cdot \left(1 - \frac{\sin(\Delta a)}{\sin(wc)}\right)$$

   dans laquelle p[%] est la probabilité en pourcentage mise à la disposition de l'utilisateur, $\Delta a$ est la limite supérieure pour une erreur d'azimut et *wc* est l'erreur maximale possible de l'angle d'azimut.

2. Procédé (100) selon la revendication 1,
   **caractérisé en ce que**
   la limite supérieure pour une erreur d'azimut est un critère de précision défini par l'utilisateur.

3. Procédé (100) selon la revendication 1 ou la revendication 2,
   **caractérisé en ce que**
   dans le cadre du contrôle de sécurité (200) par l'appareil de mesure (1), un contrôle automatique (250) est effectué pour vérifier si la probabilité que l'estimation de précision satisfasse à un critère de précision préalablement défini satisfait à un critère de probabilité préalablement défini, dans lequel

   - si le critère de probabilité est satisfait, l'appareil de mesure (1) met automatiquement à la disposition d'un destinataire externe, à une interface de l'appareil de mesure (1), un signal (160) qui comprend au moins des informations sur l'orientation azimutale (a), et
   - si le critère de probabilité n'est pas satisfait, l'appareil de mesure (1) émet automatiquement un avertissement (260) à l'utilisateur sur un dispositif d'affichage ou au moyen d'une unité de signal d'avertissement de l'appareil de mesure (1).

4. Procédé (100) selon la revendication 3,
   caractérisé en ce què,
   si le critère de probabilité n'est pas satisfait, l'appareil de mesure (1) retarde (270) ou empêche (280) automatiquement la mise à disposition (160) du signal.

5. Procédé (100) selon la revendication 3 ou la revendication 4,
   **caractérisé en ce que**,
   si le critère de probabilité n'est pas satisfait, l'avertissement (260) comprend une invitation à compenser (130) l'appareil de mesure (1).

6. Procédé (100) selon la revendication 4 ou la revendication 5,

**caractérisé en ce que**,
jusqu'à une compensation (130) de l'appareil de mesure (1), l'appareil de mesure (1) empêche automatiquement (280) une mise à disposition (160) d'un signal.

7. Procédé (100) selon la revendication 6,
**caractérisé en ce que**
le signal comprend l'estimation de précision, le critère de précision et/ou une direction et une distance par rapport à une cible déterminées par l'appareil de mesure (1).

8. Procédé (100) selon l'une des revendications 3 à 7,
**caractérisé en ce que**
l'avertissement (260) à l'utilisateur comprend au moins un signal d'avertissement sous la forme d'un signal acoustique émis par un appareil d'émission de signal acoustique de l'unité de signal d'avertissement et/ou d'une alarme vibrante émise par un générateur de signal d'alarme vibrante de l'unité de signal d'avertissement.

9. Procédé (100) selon la revendication 8,
**caractérisé en ce que**
le type de signal d'avertissement est sélectionnable par l'utilisateur.

10. Procédé (100) selon l'une des revendications 3 à 9, dans lequel des données de mesure sont affichées à l'utilisateur sur l'appareil de mesure (1),
**caractérisé en ce que**
l'avertissement (260) à l'utilisateur comprend au moins un affichage de la probabilité déterminée et/ou de la non-satisfaction du critère de probabilité, dans lequel la probabilité déterminée et/ou la non-satisfaction du critère de probabilité sont

- affichées à la place des données de mesure ou
- mises en évidence optiquement en commun avec les données de mesure par le même moyen d'affichage de l'appareil de mesure (1) que les données de mesure.

11. Procédé (100) selon la revendication 10,
**caractérisé en ce que**
la probabilité déterminée et/ou la non-satisfaction du critère de probabilité sont affichées sur le même écran ou réfléchies dans la même optique de l'appareil de mesure (1) que les données de mesure, et

- mises en évidence en couleur,
- clignotantes,
- représentées graphiquement et/ou
- superposées aux données de mesure.

12. Procédé (100) selon l'une des revendications précédentes,
**caractérisé par**

- une compensation (130) de l'appareil de mesure (1) avant la détermination (110) de l'orientation azimutale (a), et
- une définition commandée par l'utilisateur du critère de précision (140) et/ou du critère de probabilité (240).

13. Procédé (100) selon la revendication 12,
**caractérisé en ce que**
la définition commandée par l'utilisateur comporte une interrogation du critère de précision et/ou du critère de probabilité par l'appareil de mesure (1) et une entrée du critère de précision et/ou du critère de probabilité par un utilisateur de l'appareil de mesure (1), dans lequel le critère de précision comprend au moins une valeur seuil de précision et le critère de précision est satisfait si la précision à attendre atteint ou dépasse la valeur seuil de précision.

14. Procédé (100) selon l'une des revendications précédentes,
**caractérisé en ce que**

- l'appareil de mesure (1) est orienté plusieurs fois différemment en azimut et en élévation pour obtenir les données de mesure de la boussole magnétique (2), et/ou

- l'estimation de précision est déterminée automatiquement par l'appareil de mesure (1) sur la base de données de mesure de la boussole magnétique (2) pour une compensation des champs parasites magnétiques durs et doux inhérents à l'appareil.

15. Produit logiciel d'ordinateur avec un code de programme qui est stocké sur un support lisible par machine et qui permet de mettre en œuvre le procédé selon l'une des revendications 1 à 14.

Fig. 1

Fig. 2

Fig. 3

Fig. 4

Fig. 5

$\mathcal{F}ig.\ 6$

Nord-Süd-Richtung

Ost-West-Richtung

Azimutalfehler [mil]

Azimutalfehler [mil]

Entfernung zum Kompensationsort [km]

Entfernung zum Kompensationsort [km]

$\mathcal{F}ig.\ 7$

110

| Bestimmen der azimutalen Ausrichtung | → | 120 Schätzen der Genauigkeit | → | 150 Ausgabe des Schätzwertes |

160

| Bereitstellen des Signals |

(Stand der Technik)

Fig. 8

| Kompensation des Gerätes | → | Bestimmen der azimutalen Ausrichtung | 110 |

100

| 130 Festlegen eines Genauigkeits-Kriteriums | | Schätzen der Genauigkeit | 120 |

140

| 220 Ermitteln der Wahrscheinlichkeit | 200 |

| 230 Ausgabe der Wahrscheinlichkeit |

Fig. 9a

Fig. 9b

Fig. 10

Fig. 11a

Fig. 11b

Fig. 11c

Fig. 11d

Fig. 11e

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7340362 B2
- US 7325320 B2
- US 4949089 A
- DE 19609762 C1
- US 6539639 B2
- US 8275544 B1
- US 2010307015 A1